# NEW EUROPEAN PATENT SPECIFICATION

(11) **EP 0 310 190 B2**
(45) Date of publication and mention of the opposition decision: **05.06.2002**
(45) Mention of the grant of the patent: 24.02.1993
(21) Application number: 88202115.7
(22) Date of filing: 28.09.1988
(51) Int. Cl.: F16L 59/14

(54) **A heat insulated pipe element, a pipeline of such elements, and a method of laying such a pipeline**
Wärmeisolierter Rohrleitungsabschnitt, Rohrleitung aus solchen Rohrelementen und Verfahren zum Verlegen einer solchen Rohrleitung
Elément de conduite isolé thermiquement, conduite composée de tels éléments et méthode de pose d'une telle conduite

(30) Priority: 28.09.1987 DK 507887
(43) Date of publication of application: 05.04.1989
(73) Proprietor: i.c. Möller a/s, DK-7000 Fredericia (DK)
(72) Inventor: Pedersen, Hans Nörgaard, DK-8700 Horsens (DK)
(74) Representative: Nielsen, Leif

(56) References cited:
- DE-A- 2 314 713
- DE-A- 3 530 187
- DE-A- 3 609 540
- Handbook Lögstör Rör industri a/s, German edition 1/87, pp. 5.2.1, 5.2.2, 5.2.7
- Danish Standard 2181

## Description

The invention relates to a heat insulated pipe element, particularly for use as a straight pipe element in district heating pipelines, having an inner conductor of annealed copper, a surrounding layer of a heat insulating material, and an outer mantle pipe, preferably of plastic, as well as to a pipeline of such elements and a method of laying such a pipeline.

Such a well known pipe element is discussed as state of the art in FR-A-2 536 007. At laying such pipe elements in the ground it has to be considered that the pipes will be subjected to considerable temperature variations, viz. already by the initial operation of the pipe system and by future repairs, connections or operational stops, where the temperature may change between the ambient temperature and an operational temperature of e.g. 90-120°C. Under free conditions this would imply a considerable length variation of the pipes, and originally it has been natural to make such variations possible by incorporating lyre bends or axial compensators in the subterranean pipe system. This technique is still used to a certain extent, but it involves several practical and economical problems, and other, partly more advantageous techniques have been developed for enabling the mounting of the pipes without such special components. By way of example the pipes may be laid in a sinuous manner with the use of pipes of annealed copper and an insulation layer of a soft type as known from FR-A-2 536 007, whereby the inner pipe, when subjected to axial expansion or contraction, may change its shape into a more, respectively less pronounced sinuosity relative to the sinuous mantle tube as held in and by the ground. Also this technique, however, involves different problems, and generally it is preferred to use pipes of the said rigid type, i.e. having a stiff insulation material, which centers the inner pipe in the mantle pipe and transfers axial forces between the inner pipe and the mantle pipe; also, it is preferred to lay out the pipes with a straight or evenly curved configuration and not with a sinuous shape, as this is expensive to provide.

Advantage is hereby taken of the fact that the earth friction on the outside of the mantle tubes will show a braking effect on axial movements of the inner pipes, as these, through the stiff insulation material, seek to move the mantle tubes correspondingly. Thus, a heating of the inner pipes from the mounting temperature will not necessarily result in any axial expansion of the pipe, as the associated expansion tendency of an axially anchored pipe may just be converted into a build-up of a corresponding compressive stress in the pipe. The pipe shall only have to resist this stress without being damaged. It is already well known that fixed iron pipes can hardly resist the relevant compressive stress when the operation temperature rises to and above 100°C, but it is also known that this problem may be overcome by mounting the pipes in a prestretched condition, viz. by a mechanical prestretching or a heating during the mounting such that by the mounting the pipes will assume a length expanded condition corresponding to approximately the half of the expansion, which would apply to the pipes in a non-fixed condition thereof by a heating from the mounting temperature to the operational temperature. When the pipes are anchored in the ground in this half-stretched condition the build-up of the compressive stress in the pipes by the heating to the operational temperature will be considerably reduced, while by a later cooling of the pipes to the ambient temperature a tensile stress will be induced in the pipes. It has been found that iron pipes may well resist these respective compression and tensile stresses, when by the mounting of the pipes these have been prestretched to approximately the half of the expected expansion, in free condition, between the ambient temperature and the operational temperature.
This also applies in such cases, where the inner pipe is desired to consist of copper rather than steel. Copper pipes are considerably more expensive, but they show the advantage of being corrosion proof, i.e. they may be mounted in places where repairs would be extra difficult or expensive, thus justifying increased installation costs. Copper pipes may be more difficult to join than the steel pipes, the latter being joinable by simple welding; copper pipes may well be joined in a corresponding manner by hard-soldering, but by the associated glowing up of the pipe ends the material of these will get softened, and it has been found that the discussed stresses may then give rise to deformations and ruptures in these annealed ring areas. Normally, therefore the copper pipes should be joined otherwise, and fully usable alternative joining methods have already been developed, although they are more difficult and more expensive.

Object of the invention is to provide a heat insulated pipe element of the type according the opening paragraph, which pipe element may be laid or mounted in a simplified manner.

According to the invention this is achieved by the combination of features as specified in the characterizing part of claim 1. The invention is based on the recognition that annealed copper has a relaxation capability which implies that occurring stresses disappear in time, such that a pipe, which is fixed or anchored in a certain compression or tensile stress condition, will appear almost free of stress after a period of approximately one year, without any change of its shape. According to the invention advantage is taken of this fact to the effect that in the insulated pipes of the said rigid type the inner pipes consist of annealed copper, which has not been proposed previously. Such pipes will show the immediate advantage of being joinable by hard-soldering, as the annular pipe material portions adjacent the joints will not then be substantially changed with respect to their material characteristics, i.e. a pipe length of such pipes will correspond to a homogeneous continuous pipe. Besides the annealed, soft copper pipes, when used in a rigid system, will be readily bendable together with the mantle tube into desired curved shapes without in advance being completed with special spacer means for maintaining their distance from the mantle pipe. Moreover the pipes may be laid or mounted without in the long run being subjected to large stresses, thanks to their said relaxation capability.

This applies generally, i.e. whether or not the pipes are mounted by a conventional pre-stretching technique, but in connection with the invention it has been found that the annealed copper pipes may well resist quite considerable axial stresses during a relatively long period of time, e.g. some months, and accordingly it has been found possible to mount the pipes in a cold or generally unstretched condition, which implies a considerable simplification of the pipe laying. When the pipeline, once laid, is heated to the operational temperature the fixed pipes will be subjected to such a compression stress which could in the long run be damaging to the pipe, but due to the said relaxation capability the stress will decrease so rapidly, viz. during the following few months, that it will reach an uncritical magnitude long before any damaging tendencies occur. After about one year the pipeline will be entirely free of stress.

By operational stops after an advanced relaxation of the material the associated cooling of the pipes will of course result in a rapid build-up of a tensile stress in the pipes, the more the relaxation has already proceeded, but it will apply correspondingly that the pipes may well resist such a strong stress formation, when it is not permanent. Normally such operational stops will be of a relatively very short duration, but even if they are of a long duration the relaxation capability will condition that the stress be reduced in time such that damages do not get time to occur.

The applied tubes of annealed copper have been found to be perfectly usable in the said rigid systems, as the relevant insulation materials, preferably polyurethane foam, adhere safely to the pipe surface.

The invention comprises the single pipe elements of the rigid type with inner conductor pipes of annealed copper as well as complete, laid-out pipelines or pipe systems made of such pipe elements and the method, by which the pipe elements or the pipeline are/is laid out in a cold and generally non-preexpanded condition.

It can be anticipated that the relaxation in the annealed copper starts immediately upon the initiation of the stress build-up, and in connection with the heating of a long pipeline it may well happen that a noticeable relaxation has already taken place in the part of the system which is first heated by the relevant heating medium, when the medium later on heats the last part of the pipeline or pipe system. This implies that the compression stress in the pipe as a whole can be less than could be expected, and this, of course, will favourably affect the dimensioning conditions of the pipeline.

## Claims

1. A heat insulated pipe element used or for use as a straight pipe element in a district heating pipeline, having an inner copper conductor pipe, a surrounding layer of a heat insulating material and an outer mantle pipe, preferably of plastic, **characterized by** the combination of the inner conductor pipe being of annealed copper and of the pipe element being of the bonded type, with the inner conductor pipe being radially and axially stabilised relative to the mantle pipe by means of the heat insulating material being rigid and well adhering to the relevant pipe surfaces.

2. A pipeline consisting of straight pipe elements according to claim 1, **characterized in that** the copper pipes are laid along a straight line without inclusion of axial compensator means and are joined by hard-soldering.

3. A method of laying out a straight length of a district heating pipeline by joining pipe elements according to claim 1, without interposed axial compensator elements **characterized in that** the pipeline is laid out with a straight configuration for fixation in the ground in a cold and generally non-prestretched condition.

## Patentansprüche

1. Wärmeisolierter Rohrleitungsabschnitt, verwendet als oder zur Verwendung als gerader Rohrleitungsabschnitt in einer Fernheizungsrohrleitung, mit einem inneren Leitungsrohr aus Kupfer, einer umringenden Schicht aus Wärmeisolationsmaterial und einem äußeren Mantelrohr, vorzugsweise aus Kunststoff, **dadurch gekennzeichnet, daß** die Kombination des inneren Leitungsrohrs aus vergütetem Kupfer ist und daß der Rohrleitungsabschnitt vom Verbundtyp ist, bei dem das innere Leitungsrohr mittels eines steifen und fest an den betreffenden Rohroberflächen haftenden Wärmeisolationsmaterials radial und axial gegenüber dem Mantelrohr stabilisiert ist.

2. Rohrleitung aus geraden Rohrleitungsabsnitten nach Anspruch 1, **dadurch gekennzeichnet, daß** die Kupferrohrleitungen eine gerade Linie entlang ohne Einschluß von axialen Kompensationsorganen angeordnet sind und durch Hartlöten miteinander verbunden sind.

3. Verfahren zum Verlegen einer geraden Strecke einer Fernheizungsrohrleitung, bei dem Rohrleitungsabschnitte miteinander verbunden werden, nach Anspruch 1, ohne dazwischen angebrachte axiale Kompensationsorgane, **dadurch gekennzeichnet, daß** die Rohrleitung mit einer geraden Konfiguration zum festen Anbringen im Boden im kalten und im allgemeinen nicht vorgespannten Zustand verlegt wird.

## Revendications

1. Elément de conduite isolé thermiquement, utilisé ou destiné à être utilisé comme élément rectiligne de conduite dans une conduite de chauffage urbain, possédant une conduite conductrice intérieure en cuivre, une couche extérieure en matériau thermiquement isolant et une conduite d'enveloppe extérieure de préférence en plastique, **caractérisé en ce que** la combinaison de la conduite conductrice intérieure est en cuivre recuit et l'élément de conduite est du type composite, la conduite conductrice intérieure étant stabilisée axialement et radialement par rapport à la conduite d'enveloppe au moyen d'un matériau thermiquement isolant, étant rigide et bien adhérent aux surfaces de confuite concernées.

2. Conduite composée d'éléments rectilignes de conduite selon la revendication 1, **caractérisé en ce que** les conduites de cuivre sont déposées au long d'une ligne rectiligne sans inclusion d'organes de compensateur axial et sont assemblées par brasage.

3. Procédé de pose d'une longueur droite de conduite de chauffage urbain par assemblage d'éléments selon la revendication 1, sans éléments de compensateur axial interposés, **caractérisé en ce que** la conduite est déposée avec une configuration rectiligne en vue de sa fixation dans le sol, dans un état froid et généralement non sous précontrainte.
